# EUROPEAN PATENT SPECIFICATION

(11) **EP 3 639 722 B1**
(45) Date of publication and mention of the grant of the patent: **10.03.2021**
(21) Application number: 18201368.0
(22) Date of filing: 18.10.2018
(51) Int. Cl.: A47L 15/42

(54) **DISHWASHERS HAVING A HEAT EXCHANGER**
GESCHIRRSPÜLER MIT WÄRMETAUSCHER
LAVE-VAISSELLE DOTÉS D'UN ÉCHANGEUR DE CHALEUR

(43) Date of publication of application: 22.04.2020
(73) Proprietor: Whirlpool Corporation, Benton Harbor, MI 49022 (US)
(72) Inventor: Vallejo, Alvaro, 21024 Biandronno - Frazione Cassinetta (VA) (IT); Varvate, Subhash N., 21024 Biandronno - Frazione Cassinetta (VA) (IT); Wolowicz, Mateusz Michal, 21024 Biandronno - Frazione Cassinetta (VA) (IT)
(74) Representative: Spina, Alessandro

(56) References cited:
- DE-A1- 3 901 169
- DE-A1-102014 104 373

## Description

### Technical field of the invention

The present invention generally relates to the field of dishwashing appliances and more particularly to dishwashers of the type having a heat exchanger allowing to recover thermal energy from hot waste water.

### Background

It is known that energy consumption requirements of household appliances are becoming stricter and stricter, constantly leading manufacturers to look for improved solutions. In the case of dishwashing machines it is known to use hot water from a previous washing cycle phase as a heat exchange media to pre-heat fresh water stored in a tank or container and intended to be used for a subsequent washing cycle phase. In this way less thermal energy is needed to bring the fresh water to the temperature required to carry out the washing cycle, e.g. 65°C. DE3901169 gives an example of a dishwashing machine of this type.

### Summary of the invention

The aim of the present invention is to provide a dishwashing machine with a heat exchanger that allows to improve energy savings compared to the solutions known in the art.

This aim is achieved by a dishwashing machine according to the independent claim 1. Preferred features of the present invention are set forth in the dependent claims.

A dishwasher according to the invention is provided with a fresh water tank or container inside which a heat exchanger brings hot waste water collected in a sump into thermal contact with fresh water fed by an external water supply. Thermal energy is thus transferred in the form of heat from the hot waste water to the fresh water before the hot waste water is drained out to an external discharge pipe. According to the invention, hot waste water is made to circulate through the heat exchanger by a drain pump of the dishwashing machine, which is fluidly connected to a diverter or directional valve. The diverter valve, which is driven by a control unit of the washing machine, may be set either in a first configuration, wherein fluid communication is established between the drain pump and the heat exchanger, or in a second configuration, wherein fluid communication is instead established with a discharge pipe and hot waste water is drained out.

Thanks to the relatively short flow path from the drain pump to the fresh water tank compared with the flow path between the latter and the wash pump of a dishwashing machine, losses of thermal energy are minimized, thus improving efficiency of the heat recovery process. For the same reason, the flow rate of the hot waste water made to circulate through the heat exchanger can be more accurate and stable, which allows to achieve a very good performance during the heat exchange process.

By using the drain pump as a means to recirculate waste water in addition to drain it, substantially no structural complexity is added to main washing circuit of the dishwashing machine, while the manufacturing costs are affected in a very limited way.

Since the main washing circuit is not affected by the heat recovery function, the dishwashing machine features a modular design allowing to easily create product variants.

According to one of such variants, a closed-loop drying circuit of the washing machine may advantageously be connected to the drain pump in parallel with the heat exchanger, thus allowing to exploit the same pump for supplying hot waste water to the heat exchanger, simply draining it, or for pumping fresh water received in the sump into a tank of the closed-loop drying circuit to cool a condenser thereof during the drying process.

Further advantages, features and operation modes of the present invention will become clear from the following detailed description of embodiments thereof, which are given for illustrative and not-limiting purposes.

### Brief description of the drawings

Reference will be made to the figures of the accompanying drawings, in which:
- figure 1 is a diagram schematically showing the main components of a dishwashing machine according to an embodiment of the present invention;
- figure 2 is a diagram schematically showing the main components of a dishwashing machine according to another embodiment of the present invention.

### Detailed description of preferred embodiments

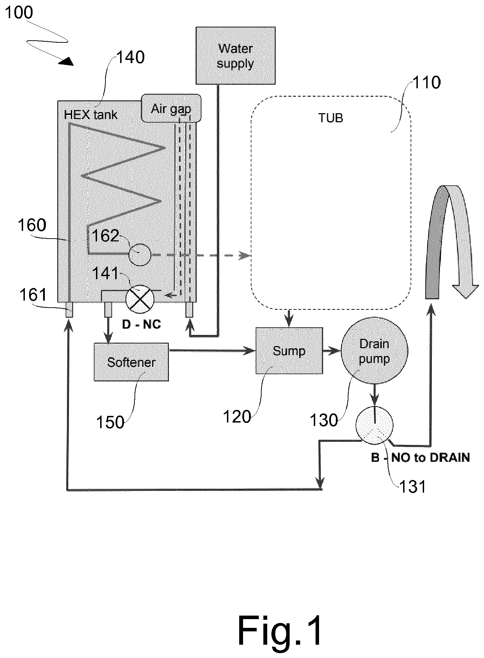

With reference initially to figure 1, a dishwashing machine according to the invention is generally indicated by reference number 100. The dishwashing machine 100 comprises a tub 110 that is disposed in an outer case (not shown) and defines a wash space where dishes can be received for washing. A sump 120 is fluidly connected to the tub 110 to receive the wash water needed to wash dishes and to collect the wash water to be recirculated during a wash cycle. As schematically shown in figure 1, the sump 120 may be arranged e.g. under the tub 110 it in a vertical direction so as to collect water by gravity.

A door (not shown) of the washing machine opens or closes the tub 110. The door may be equipped with a control panel and an associated control unit (not shown) that control operation of the dish washing machine 100.

The tub 110 houses a plurality of racks (not shown) where dishes can be placed for washing. The racks may comprise e.g. a top rack and a bottom rack disposed under the top rack.

The tub 110 also comprises a plurality of spray arms (not shown), which are supplied with wash water from the sump 120 and spray it towards the dishes arranged on the racks disposed inside the tub 110. To this aim a wash pump (not shown) is employed.

The spray arms may comprise e.g. a bottom arm (not shown) connected to the sump 120, an intermediate arm (not shown) disposed above the bottom arm and supplied with the wash water from the sump 120, and a top arm (not shown) disposed above the intermediate arm and supplied with the wash water from the sump 120.

It will be appreciated that the configuration of the door and of the racks and spray arms arranged in the tub are not limiting features of the invention.

A drain pump 130 is fluidly connected to the sump 120 to discharge the wash water at the end of a wash cycle.

The dishwashing machine 100 also comprises a water tank 140, i.e. a container or reservoir, configured to receive and store a predefined amount of fresh water from an external water supply, e.g. the water mains. The water tank 140 is fluidly connected to the sump 120 through an on-off valve 141 and a softener 150. At the beginning of a wash cycle, the on-off valve 141 is opened and the fresh water stored in the water tank 140 is made to pass through the softener 150 and collected into the sump 120, where it is heated and made to circulate to the spray arms. The on-off valve 141 is configured to allow either to store water in the tank 140 as discussed above, or to let it pass directly from the main water supply to the softener 150 as it happens in prior art dishwashing machines.

The dishwashing machine 100 according to the invention also comprises a heat exchanger 160 that is arranged inside the water tank 140. The heat exchanger 160 may for instance be integrally formed with the water tank 140, or it can be made as a separate component housed in the water tank 140.

The heat exchanger 160 has an inlet 161 fluidly connected with the drain pump 130 via a diverter valve 131 and a pipe, as well as through an outlet 162 that is fluidly connected to the tub 110.

At the end of a wash cycle phase the diverter valve 131 connected to the drain pump 130 allows to selectively supply the hot waste water collected in the sump 120 to the heat exchanger 160 so as to warm fresh water stored in the water tank 140. For instance, the cycle phase can be the main wash phase, wherein a detergent is dispensed into the tub.

Hot waste water enters the heat exchanger 160 at the inlet 161 and is discharged through the outlet 162 back into the tub 110, from which it reaches the sump 120 and may be made to recirculate into the heat exchanger 160. The thermal energy of the hot waste water collected in the sump 120 at the end of a wash cycle can thus be transferred to the fresh water stored in the water tank 140 before the waste water is discharged from the dishwashing machine by the drain pump. To this aim, the diverter valve 131 is set in fluid communication with an external discharge pipe, thus interrupting fluid communication with the heat exchanger 160.

In other words, according to the invention hot waste water, which is drained out of a prior art dishwashing machine, is instead effectively used at the end of a wash cycle phase in order to recover thermal energy to heat the fresh water stored in the water tank 140. A subsequent washing cycle phase will therefore benefit from pre-heated water, whose temperature is the ambient temperature or higher, thus requiring a lower amount of thermal energy to reach a desired temperature. For example, hot water having a temperature of about 50°C is typically required in the rinsing phase. By making hot waste water, which has a temperature of about 45°C, to flow through the tank 140 the thermal energy needed to heat fresh rinsing water stored therein is much lower than the energy that would be required to heat it directly from the water supply. Energy consumption is therefore effectively reduced.

The diverter valve 131 is automatically controlled by the control unit of the dishwashing machine 100.

The arrows in figure 1 schematically show the path of the water flow in the different parts of the dishwashing machine 100, in particular from the drain pump 130 to the heat exchanger 160 and the tub 110, as well as from the tank 140 to the softener 150 and to the sump 120.

Thanks to the relatively short flow path from the drain pump 130 to the fresh water tank 140 compared to the typical length of the flow path between the same tank and the wash pump of a dishwashing machine, losses of thermal energy from the hot waste water are minimized, thus improving efficiency of the heat recovery process. For the same reason, the flow rate of the hot waste water made to circulate through the heat exchanger 160 is more accurate and stable, which allows to achieve a very good performance during the heat exchange process.

Moreover, the electric motor driving the drain pump 130 may advantageously be smaller than the motor of the wash pump, which contributes to increase energy savings during operation of the dishwashing machine. The drain pump 130 preferably has a variable speed motor, which provides the further advantage of a low noise during operation.

During a typical wash cycle phase, fresh water stored in the water tank 140 is fed to the sump 120 via the softener 150 and used for a pre-wash step. No soap is generally used in this phase. The water tank 140 is then refilled from the external water supply.

The water used for the pre-wash step is drained by the drain pump 130 and the fresh water stored in the tank is filled to the sump 120, heated to a desired temperature, e.g. 65°C, and used to carry out the main wash cycle together with a measured amount of soap stored in a suitable reservoir of the dishwashing machine 100.

According to the invention, at the end of the heated main wash phase, fresh water is filled into the water tank 140 and the hot waste water collected in the sump 120 is made to circulate through the heat exchanger 160 by the drain pump 130 so as to recover thermal energy and heat the fresh water stored in the tank 140. As discussed above, the diverter valve 131 associated with the drain pump 130 is set in fluid communication with the heat exchanger 160. After this process the diverter valve 131 is set in fluid communication with a discharge pipe and the waste water is drained out.

The water tank 140 can further be used to store water from the very last rinse phase and use it in the pre-wash phase of the following wash cycle.

A subsequent wash cycle phase will therefore benefit from pre-heated water stored in the water tank 140. It will be appreciated that the pre-heated water is at room temperature or higher depending on the time that lapses between a wash cycle and a subsequent one.

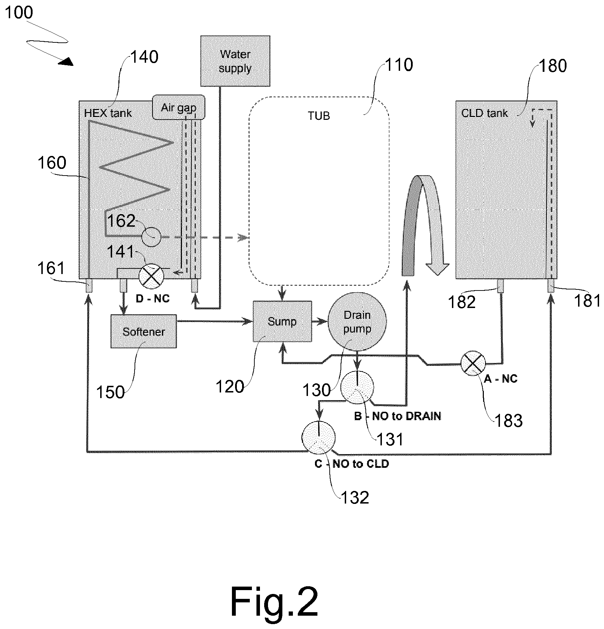

Now referring to figure 2, according to another embodiment of the invention the drain pump 130 may advantageously be fluidly connected not only to the heat exchanger 160, but also to a closed-loop drying assembly of the dishwashing machine 100. Such an assembly is typically employed to remove moisture from hot air used to dry dishes after a wash cycle. The closed-loop drying assembly of the dishwashing machine 100 of the invention comprises in a known way a water tank 180 having an inlet 181 and an outlet 182 allowing to fill in and discharge water, respectively. According to the invention, the inlet 181 is fluidly connected to the drain pump 130, thereby allowing to use this pump to feed fresh water received in the sump 120 through the external water supply and the softener 150 to the water tank 180.

This results in further energy savings in view of the small power motor employed by the drain pump compared to the motor of the wash pump.

As shown in the embodiment of figure 2, the drain pump 130 is fluidly connected to the water tank 180 of the closed-loop drying assembly by way of a first diverter valve 131, which is the same valve described above in connection with the previous embodiment of the invention, and by way of a second diverter valve 132 arranged downstream of the first diverter valve 131 and connected in series with it. Both valves are automatically driven by the control unit of the dishwashing machine 100. According to this configuration, the first diverter valve 131 is configured to establish fluid communication with either the second diverter valve 132 or the external discharge pipe, while the second diverter valve is configured to establish fluid communication with either the heat exchanger 160 or the tank 180 of the closed-loop drying assembly.

The arrows in figure 2 schematically show the path of the water flow in the different parts of the dishwashing machine 100, in particular from the drain pump 130 to the heat exchanger 160 and the tub 110, as well as from the tank 140 to the softener 150 and to the sump 120. The water flow path to the water tank 180 of the closed-loop drying assembly is also schematically shown.

It will be appreciated that a single three-way valve might be used instead of the first and second diverter valves described above.

Considering that the fresh water stored in the water tank 180 and used to cool the condenser during the drying cycle is at least at room temperature, an additional water amount is available to be fed to the sump 120 and employed in a wash cycle together with the water stored in the water tank 140 associated with the heat exchanger 160. To this aim an on-off valve 183 may be arranged downstream of the outlet 182 and connected in series with the water tank 180 of the closed-loop drying assembly.

According to this configuration the water stored in the water tank 140 having the heat exchanger 160 may be used e.g. for a pre-wash step. As discussed above, this water is at least at room temperature. The fresh and clean water stored in the water tank 180 of the closed-loop drying assembly, which is also at least at room temperature, can be used for the main wash step. After the main wash step the resulting hot waste water can be fed to the heat exchanger 160 and used to warm fresh water newly fed from the water supply into the water tank 140, which may in turn be used for a final rinse step.

The present invention has hereto been disclosed with reference to preferred embodiments thereof. It will be appreciated that there may be other embodiments relating to the same inventive idea, all of which are included in the scope of protection defined by the claims set out below.

## Claims

1. A dishwashing machine (100) comprising:
a. a tub (110) that defines a wash space where dishes can be washed,
b. a sump (120) fluidly connected to said tub (110),
c. a drain pump (130) fluidly connected to the sump (120) to discharge waste wash water at the end of a wash cycle,
d. a water tank (140) configured to receive and store a predefined amount of fresh water from an external water supply, said water tank (140) being fluidly connected to the sump (120) through an on-off valve (141) and a softener (150),
e. a heat exchanger (160) arranged inside the water tank (140), and **characterized in that** said heat exchanger (160) has an inlet (161) fluidly connected with the drain pump (130) and an outlet (162) fluidly connected to the tub (110),
and wherein a diverter valve (131) is arranged downstream of the drain pump (130) and configured to selectively direct a flow of water coming from the drain pump (130) to either the heat exchanger (160) or an external discharge pipe.

2. The dishwashing machine of claim 1, further comprising a closed-loop drying assembly having a water tank (180) with an inlet (181) and an outlet (182), and wherein the drain pump (130) is also fluidly connected to said inlet (181) to selectively supply water to the water tank (180), while said outlet (182) is fluidly connected to the sump (120).

3. The dishwashing machine of claim 2, wherein the drain pump (130) is fluidly connected to the water tank (180) through a first diverter valve (131) and a second diverter valve (132) arranged downstream of the first diverter valve (131) and connected in series with it, said second diverter valve (132) being fluidly connected to the inlet (161) of the heat exchanger (160) and to the inlet of the water tank (180) of the closed-loop drying assembly.

4. The dishwashing machine of claim 2 or 3, wherein an on-off valve (183) is associated with the outlet (182) of the water tank (180) of the closed-loop drying assembly, said on-off valve being operable to selectively feed water from the water tank (180) to the sump (120).

5. A method to operate a dishwashing machine (100) having a heat exchanger (160) arranged inside a water tank (140) configured to receive and store a predefined amount of fresh water from an external water supply, said method comprising the following steps:
a. Feeding fresh water stored in said water tank (140) to a sump (120) of the dishwashing machine (100) via a softener (150),
b. Heating the fresh water received in the sump (120) at a desired wash temperature,
c. Carrying out a wash cycle,
d. Filling fresh water into the water tank (140),
e. Making the hot waste water collected in the sump (120) at the end of the wash cycle to circulate through the heat exchanger (160),
f. Draining the waste water out of the dishwashing machine, and **characterized in that** a drain pump (130) of the dishwashing machine (100) is employed to make the hot waste water circulate through the heat exchanger (160).

6. The method of claim 5, wherein a diverter valve (131) arranged downstream of the drain pump (130) is employed to selectively supply hot waste water to the heat exchanger (160).

7. The method of claim 5 or 6, wherein the drain pump (130) is also fluidly connected with a water tank (180) of a closed-loop drying assembly of the dishwashing machine (100), and wherein after the wash cycle the drain pump (130) is employed to supply fresh water to said water tank (180) to cool a condenser of said closed-loop drying assembly.

8. The method of claim 7, wherein and on-off valve (183) is associated with an outlet of the water tank (180) of the closed-loop drying assembly, and wherein said valve is operated to selectively feed the water supplied by the drain pump (130) to the water tank (180) to the sump (120).

## Patentansprüche

1. Geschirrspülmaschine (100), umfassend:
a. eine Wanne (110), die einen Spülraum definiert, in dem Geschirr gespült werden kann,
b. einen Sammelbehälter (120) der fluidisch mit der Wanne (110) verbunden ist,
c. eine Entleerungspumpe (130), die fluidisch mit dem Sammelbehälter (120) verbunden ist, um verschmutztes Spülwasser am Ende eines Spülzyklus auszubringen,
d. einen Wassertank (140), der konfiguriert ist, um eine vordefinierte Menge an Frischwasser von einer externen Wasserzuführung zu empfangen und zu lagern, wobei der Wassertank (140) durch ein Ein-/ Aus-Ventil (141) und einen Weichmacher (150) fluidisch mit dem Sammelbehälter (120) verbunden ist,
e. einen Wärmetauscher (160), der innerhalb des Wassertanks (140) angeordnet ist,
und **dadurch gekennzeichnet, dass** der Wärmetauscher (160) einen Einlass (161) aufweist, der fluidisch mit der Entleerungspumpe (130) verbunden ist, und einen Auslass (162), der fludisch mit der Wanne (110) verbunden ist,
und wobei ein Umschaltventil (131) stromabwärts der Entleerungspumpe (130) angeordnet ist, und konfiguriert ist, um selektiv einen Wasserstrom, der von der Entleerungspumpe (130) kommt, entweder in den Wärmetauscher (160) oder ein externes Ausbringungsrohr zu leiten.

2. Geschirrspülmaschine nach Anspruch 1, weiter eine Trockenanordnung in einer geschlossenen Schleife umfassend, die einen Wassertank (180) mit einem Einlass (181) und einem Auslass (182) aufweist, und wobei die Entleerungspumpe (130) auch fluidisch mit dem Einlass (181) verbunden ist, um selektiv Wasser zu dem Wassertank (180) zuzuführen, während der Auslass (182) fluidisch mit dem Sammelbehälter (120) verbunden ist.

3. Geschirrspülmaschine nach Anspruch 2, wobei die Entleerungspumpe (130) durch ein erstes Umschaltventil (131) und ein zweites Umschaltventil (132), das stromabwärts von dem ersten Umschaltventil (131) angeordnet ist, und damit in Reihe verbunden ist, fluidisch mit dem Wassertank (180) verbunden ist, wobei das zweite Umschaltventil (132) fluidisch mit dem Einlass (161) des Wärmetauschers (160) und mit dem Einlass des Wassertanks (180) der Trockenanordnung in einer geschlossenen Schleife verbunden ist.

4. Geschirrspülmaschine nach Anspruch 2 oder 3, wobei ein Ein-/ Aus-Ventil (183) dem Auslass (182) des Wassertanks (180) der Trockenanordnung in einer geschlossenen Schleife zugeordnet ist, wobei das Ein-/ Aus-Ventil betreibbar ist, um selektiv Wasser aus dem Wassertank (180) in den Sammelbehälter (120) zu speisen.

5. Verfahren zum Betreiben einer Geschirrspülmaschine (100), die einen Wärmetauscher (160) aufweist, der innerhalb eines Wassertanks (140) angeordnet ist, der konfiguriert ist, um eine vordefinierte Menge an Frischwasser von einer externen Wasserzuführung zu empfangen und zu lagern, wobei das Verfahren die folgenden Schritte umfasst:
a. Speisen von in dem Wassertank (140) gelagertem Frischwasser in einen Sammelbehälter (120) der Geschirrspülmaschine (100) über einen Weichmacher (150),
b. Erwärmen des in dem Sammelbehälter (120) empfangenen Frischwassers auf eine gewünschte Spültemperatur,
c. Ausführen des Spülzyklus,
d. Füllen von Frischwasser in den Wassertank (140),
e. Dafür sorgen, dass das heiße, in dem Sammelbehälter (120) gesammelte Abwasser am Ende des Spülzyklus durch den Wärmetauscher (160) zirkuliert,
f. Entleeren des Abwassers aus der Geschirrspülmaschine,
und **dadurch gekennzeichnet, dass** eine Entleerungspumpe (130) der Geschirrspülmaschine (100) eingesetzt wird, um das heiße Abwasser durch den Wärmetauscher (160) zurkulieren zu lassen.

6. Verfahren nach Anspruch 5, wobei das Umschaltventil (131), das stromabwärts der Entleerungspumpe (130) angeordnet ist, eingesetzt wird, um selektiv heißes Abwasser zum Wärmetauscher (160) zuzuführen.

7. Verfahren nach Anspruch 5 oder 6, wobei die Entleerungspumpe (130) auch fluidisch mit einem Wassertank (180) einer Trockenanordnung in einer geschlossenen Schleife der Geschirrspülmaschine (100) verbunden ist, und wobei nach dem Spülzyklus die Entleerungspumpe (130) eingesetzt wird, um Frischwasser zu dem Wassertank (180) zuzuführen, um einen Kondensator der Trockenanordnung in einer geschlossenen Schleife zu kühlen.

8. Verfahren nach Anspruch 7, wobei das Ein-/ Aus-Ventil (183) einem Auslass des Wassertanks (180) der Trockenanordnung in einer geschlossenen Schleife zugeordnet ist, und wobei das Ventil betrieben wird, um selektiv das Wasser, das durch die Entleerungspumpe (130) zu dem Wassertank (180) zugeführt wird, in den Sammelbehälter (120) zu speisen.

## Revendications

1. Lave-vaisselle (100) comprenant :
a. une cuve (110) qui définit un espace de lavage où la vaisselle peut être lavée,
b. un bac de collecte (120) raccordé de manière fluidique à ladite cuve (110),
c. une pompe de vidange (130) raccordée de manière fluidique au bac de collecte (120) pour évacuer l'eau usée de lavage à la fin d'un cycle de lavage,
d. un réservoir d'eau (140) configuré pour recevoir et stocker une quantité prédéfinie d'eau douce provenant d'une alimentation externe en eau, ledit réservoir d'eau (140) étant raccordé de manière fluidique au bac de collecte (120) par l'intermédiaire d'une vanne tout ou rien (141) et d'un adoucisseur (150),
e. un échangeur de chaleur (160) agencé à l'intérieur du réservoir d'eau (140),
et **caractérisé en ce que**
ledit échangeur de chaleur (160) présente une entrée (161) raccordée de manière fluidique à la pompe de vidange (130) et une sortie (162) raccordée de manière fluidique à la cuve (110),
et dans lequel une vanne de dérivation (131) est agencée en aval de la pompe de vidange (130) et configurée pour diriger sélectivement un écoulement d'eau provenant de la pompe de vidange (130) soit vers l'échangeur de chaleur (160), soit vers un tuyau d'évacuation externe.

2. Lave-vaisselle selon la revendication 1, comprenant en outre un ensemble séchage en boucle fermée présentant un réservoir d'eau (180) avec une entrée (181) et une sortie (182), et dans lequel la pompe de vidange (130) est également raccordée de manière fluidique à ladite entrée (181) pour fournir sélectivement de l'eau au réservoir d'eau (180), tandis que ladite sortie (182) est raccordée de manière fluidique au bac de collecte (120).

3. Lave-vaisselle selon la revendication 2, dans lequel la pompe de vidange (130) est raccordée de manière fluidique au réservoir d'eau (180) par l'intermédiaire d'une première vanne de dérivation (131) et d'une seconde vanne de dérivation (132) agencée en aval de la première vanne de dérivation (131) et raccordée en série à celle-ci, ladite seconde vanne de dérivation (132) étant raccordée de manière fluidique à l'entrée (161) de l'échangeur de chaleur (160) et à l'entrée du réservoir d'eau (180) de l'ensemble séchage en boucle fermée.

4. Lave-vaisselle selon la revendication 2 ou 3, dans lequel une vanne tout ou rien (183) est associée à la sortie (182) du réservoir d'eau (180) de l'ensemble séchage en boucle fermée, ladite vanne tout ou rien servant à alimenter sélectivement en eau le bac de collecte (120) à partir du réservoir d'eau (180).

5. Procédé pour faire fonctionner un lave-vaisselle (100) présentant un échangeur de chaleur (160) agencé à l'intérieur d'un réservoir d'eau (140) configuré pour recevoir et stocker une quantité prédéfinie d'eau douce provenant d'une alimentation externe en eau, ledit procédé comprenant les étapes suivantes :
a. la fourniture d'eau douce stockée dans ledit réservoir d'eau (140) à un bac de collecte (120) du lave-vaisselle (100) via un adoucisseur (150),
b. le chauffage de l'eau douce reçue dans le bac de collecte (120) à une température de lavage souhaitée,
c. la mise en œuvre d'un cycle de lavage,
d. l'introduction d'eau douce dans le réservoir d'eau (140),
e. la mise en circulation de l'eau usée chaude collectée dans le bac de collecte (120) à la fin du cycle de lavage à travers l'échangeur de chaleur (160),
f. la vidange de l'eau usée hors du lave-vaisselle,
**caractérisé en ce que**
une pompe de vidange (130) du lave-vaisselle (100) est utilisée pour faire circuler l'eau usée chaude à travers l'échangeur de chaleur (160).

6. Procédé selon la revendication 5, dans lequel une vanne de dérivation (131) agencée en aval de la pompe de vidange (130) est utilisée pour alimenter sélectivement en eau usée chaude l'échangeur de chaleur (160).

7. Procédé selon la revendication 5 ou 6, dans lequel la pompe de vidange (130) est également raccordée de manière fluidique à un réservoir d'eau (180) d'un ensemble séchage en boucle fermée du lave-vaisselle (100), et dans lequel, après le cycle de lavage, la pompe de vidange (130) est utilisée pour fournir de l'eau douce audit réservoir d'eau (180) pour refroidir un condenseur dudit ensemble séchage en boucle fermée.

8. Procédé selon la revendication 7, dans lequel une vanne tout ou rien (183) est associée à une sortie du réservoir d'eau (180) de l'ensemble séchage en boucle fermée, et dans lequel ladite vanne est actionnée pour introduire sélectivement l'eau fournie par la pompe de vidange (130) au réservoir d'eau (180) dans le bac de collecte (120).
